# EUROPÄISCHE PATENTSCHRIFT

(11) **EP 2 244 961 B1**
(45) Veröffentlichungstag und Bekanntmachung des Hinweises auf die Patenterteilung: **14.12.2011**
(21) Anmeldenummer: 08734476.8
(22) Anmeldetag: 09.04.2008
(51) Int. Cl.: B65G 54/00

(54) **VORRICHTUNG ZUM BERÜHRUNGSLOSEN TRANSPORTIEREN UND HALTEN VON GEGENSTÄNDEN ODER MATERIAL**
DEVICE FOR TRANSPORTING AND HOLDING OBJECTS OR MATERIAL IN A CONTACT FREE MANNER
DISPOSITIF DE TRANSPORT ET DE MAINTIEN SANS CONTACT D'OBJETS OU DE MATIÈRES

(30) Priorität: 09.04.2007 DE 102007016840
(43) Veröffentlichungstag der Anmeldung: 03.11.2010
(73) Patentinhaber: Zimmermann & Schilp Handhabungstechnik GmbH, 93055 Regensburg (DE)
(72) Erfinder: SCHILP, Michael, 93047 Regensburg (DE); ZIMMERMANN, Josef, 93047 Regensburg (DE); ZITZMANN, Adolf, 92552 Teunz (DE)
(74) Vertreter: Staudte, Ralph
(86) Internationale Anmeldenummer: PCT/DE2008/000595
(87) Internationale Veröffentlichungsnummer: WO 2008/122283

(56) Entgegenhaltungen:
- WO-A-2004/076320
- DE-A1- 19 916 922
- DE-A1- 19 916 923
- DE-C1- 19 916 859
- DE-C1- 19 916 872
- US-A- 5 810 155

## Beschreibung

Die vorliegende Erfindung betrifft eine Vorrichtung zum berührungslosen Transportieren und Halten von berührungsempfindlichen Gegenständen oder Material.

Um flächige Gegenstände, wie Bauteile, Behälter oder Materialien entlang einer Transportbahn berührungslos zu transportieren oder in einer definierten Position zu halten, sind aus dem Stand der Technik verschiedene Technologien bekannt. Weit verbreitet sind z. B. Transporteinrichtungen, die Luftpolster nutzen, wobei das Luftpolster mittels einer Vielzahl von Luftdüsen erzeugt wird. Diese sogenannten Luftlager weisen jedoch verschiedene Nachteile auf. Aus den Düsen wird ständig Luft oder ein anderes Gas ausgeblasen, d. h., es wird Luft verbraucht. Da diese Luft oft vorher gereinigt werden muss, entstehen zusätzliche Kosten. Weiterhin sind Luftlager bezüglich ihrer Regelbarkeit relativ träge und erzeugen Aufwirbelungen von Partikeln, was z. B. bei Reinraumanwendungen unerwünscht ist.

Diese Nachteile können prinzipiell durch den Einsatz einer anderen Technologie beseitigt werden. Aus dem Patentdokument US 5,810,155 ist eine Transportvorrichtung bekannt, die nach dem Schalldruckprinzip arbeitet. Es wird eine Förderschiene beschrieben, an die ein Schwingungserzeuger angekoppelt ist. Die Förderschiene wird zu Schwingungen angeregt, sodass auf der Förderschiene liegende flache Bauteile aufgrund des entstehenden Luftpolsters schweben, d. h. die Förderschiene zu keinem Zeitpunkt berühren. Es ist bekannt, stehende Wellen zu erzeugen, die lediglich ein Schweben des Bauteils bewirken. Es ist weiterhin bekannt, Wanderwellen zu erzeugen, die bewirken, dass sich das Bauteil entlang der Förderschiene bewegt.

Weitere Konstruktionen zu diesem Stand der Technik sind aus den Dokumenten WO 2004/076320, DE 19916922, DE 19916923, DE 19916859 und DE 19916872 entnehmbar.

Die bisher beschriebenen und labormäßig aufgebauten Vorrichtungen dieser Art zeigten, dass ein berührungsloses Transportieren oder Halten des Bauteils auf einer schwingenden Transportschiene prinzipiell möglich ist.

Bei den Versuchen einer praktischen Anwendung zeigten sich jedoch dann erhebliche Probleme, wenn die zu transportierenden Bauteile schwerer waren als z. B. dünne Siliziumwafer oder ähnlich leichte Materialien, was nachfolgend erläutert wird: Die Förderschiene hat ein Eigengewicht und spezifische Schwingungseigenschaften. Wenn die Förderschiene im Leerlauf betrieben wird, d. h., wenn keine Bauteile darauf schweben, kann ihr Schwingungsverhalten genau berechnet werden. Wenn die Förderschiene jedoch durch die zu transportierenden Bauteile unterschiedlich belastet wird, verändern sich die Resonanzbedingungen und somit das Schwingungsverhalten der Förderschiene ständig. Das kann dazu führen, dass in bestimmten Abschnitten der Förderschiene das Luftpolster nicht ausreichend dick ausgebildet wird und somit die Bauteile die Förderschiene berühren können. Um eine Berührung sicher zu vermeiden, müssen die Förderschiene und der Schwingungserzeuger so dimensioniert werden, dass auch bei größeren Belastungen die Förderschiene an allen Stellen der Transportbahn immer ausreichend stark schwingt. Das erfordert jedoch den Einsatz stärkerer Schwingungserzeuger, wodurch die Anlagenkosten und ebenso die Energiekosten steigen.

Es hat sich herausgestellt, dass der Bau und der Betrieb von Transportanlagen nach dem vorstehend beschriebenen Prinzip zu aufwendig und zu teuer werden, wenn großflächige und schwerere Bauteile, wie z. B. Glasplatten in der Größenordnung von einem Quadratmeter transportiert werden sollen. Dazu wäre es erforderlich, eine Vielzahl von Schwingungserzeugern unter der Transportschiene hintereinander und ggf. auch nebeneinander anzuordnen. Dadurch steigen die Anlagenkosten erheblich. Ein weiteres Problem besteht darin, dass diese Schwingungserzeuger zueinander genau justiert sein müssen, damit das gewünschte optimale Schwingungsverhalten der Transportschiene erzeugt werden kann. Da die Schwingungserzeuger selbst einer gewissen Alterung unterliegen, die geringfügige Änderungen im Schwingungsverhalten bewirkt, muss mittels einer Regelung das Schwingungsverhalten der Förderschiene nachgeregelt werden. Da diese Regelung nur möglich ist, wenn die Schwingungen der Transportschiene ständig gemessen werden, hat sich diese Technologie aufgrund des extrem hohen technischen Aufwandes nicht durchgesetzt.

Es ist daher die Aufgabe der Erfindung, eine Technologie mittels Schallschwingungen bereitzustellen, die auch für den Transport und zum Halten nicht nur von kleinflächigen und leichten Bauteilen, sondern auch für größere und schwere Bauteile geeignet ist.

Diese Aufgabe wird mit einer Vorrichtung nach Anspruch 1 gelöst.
Die erfindungsgemäße Vorrichtung zum Transportieren und Halten von Bauteilen weist wenigstens eine schwingungsfähige plattenförmige Aufnahme auf. Diese Aufnahme dient dazu, den zu transportierenden oder zu haltenden Gegenstand zu tragen.

An der schwingungsfähigen plattenförmigen Aufnahme sind wenigstens ein Schwingungserzeuger und wenigstens zwei Abstützelemente mit Schwingungsdämpfern befestigt, wobei der Schwingungserzeuger an einer vorbestimmten Stelle der Aufnahme angeordnet ist, um die Aufnahme in Biegeschwingungen zu versetzen. Die Abstützelemente sind an Stellen angeordnet, an denen die Amplitude der Biegeschwingung wenigstens 50% kleiner ist als die Maximalamplitude. Der Schwingungserzeuger wird mit einer Frequenz betrieben, die die plattenförmige Aufnahme in solche Schwingungen versetzt, dass darauf befindliche Gegenstände oder Materialien auf einem Gas- oder Luftfilm schweben. Der Gasfilm wirkt als Polster und verhindert ein Aufliegen des Bauteils auf der Aufnahme.

Mit der Erfindung wird die gestellte Aufgabe vollständig gelöst. So ist es z. B. möglich, mit einem einzigen Schwingungserzeuger einen Abschnitt einer Transportbahn von einem Meter Breite und Länge zum Transport schwerer Glasplatten mit Flächengewichten bis zu 100 kg/m² zu bauen. Da die passiven Stützpunkte lediglich mechanisch feste Verbindungen sind, wie z. B. Verschraubungen, sind die Kosten für den Bau einer solchen Transportbahn verglichen zum Stand der Technik äußerst gering. Ebenso verringert sich das Gewicht der Anlage erheblich, da die einzelnen Verschraubungen um ein Vielfaches leichter sind als ein Schwingungsaufnehmer, der anstelle der Verschraubung anzuordnen wäre. Mit dieser Erfindung ist es somit erstmalig möglich, die Ultraschall-Schwebetechnologie für einen breiten Praxiseinsatz bereitzustellen.

Nach Anspruch 2 weisen die Abstützelemente passive Schwingungsdämpfer auf oder sind als solche ausgebildet. Diese Schwingungsdämpfer dämpfen Restschwingungen, die ggf. zu unerwünschten Geräuschen an den Stützpunkten führen können. Der Fachmann für mechanische Schwingungstechnik mit den einschlägigen Kenntnissen der dazugehörigen Messtechnik kann aufgrund von Messungen bestimmen, an welchen Stellen die Schwingungsdämpfung zu installieren ist.

Nach Anspruch 3 weisen die Abstützelemente aktive Schwingungserzeuger auf. Diese Schwingungserzeuger schwingen in einer Frequenz, mit der unerwünschte Restschwingungen kompensiert werden. Diese Maßnahme kann dann erforderlich werden, wenn an wenigen Stützstellen Restschwingungen auftreten, die passiv nur schwer gedämpft werden können.

Nach Anspruch 4 ist der passive Schwingungsdämpfer einstellbar oder regelbar. Damit können noch bessere Dämpfungseigenschaften erzielt werden. Der Aufbau von einstellbaren und regelbaren passiven Schwingungsdämpfern ist bekannt und muss daher nicht näher erläutert werden.

Nach Anspruch 5 ist der aktive Schwingungsdämpfer einstellbar oder regelbar. Damit können noch bessere Kompensationseigenschaften erzielt werden. Der Aufbau von einstellbaren und regelbaren aktiven Schwingungsdämpfern ist ebenfalls bekannt und muss daher nicht näher erläutert werden.

Nach Anspruch 6 ist die plattenförmige Aufnahme zweidimensional gewölbt. Das ist z. B. vorteilhaft, wenn bahnförmiges Material, wie z. B. Papier berührungsfrei umgelenkt werden soll.

Nach Anspruch 7 ist die plattenförmige Aufnahme dreidimensional gewölbt. Das ist z. B. vorteilhaft, wenn dreidimensional ausgeformtes Material, wie z. B. eine dünne Folie auf der Aufnahme berührungsfrei gehalten werden soll, um auf der Oberseite der Folie einen Bearbeitungsprozess durchführen zu können.

Nach Anspruch 8 sind der Schwingungserzeuger auf der Oberseite der plattenförmigen Aufnahme und die Abstützelemente auf der Unterseite der plattenförmigen Aufnahme angeordnet. Das ist vorteilhaft, wenn an der Unterseite nicht genügend Bauraum zur Verfügung steht. Es ist dem Fachmann klar, dass der oder die Schwingungserzeuger an Positionen befestigt werden müssen, die z. B. den Transport der Bauteile oder des Materials nicht behindern. Dazu wird eine weitere Erläuterung im Ausführungsbeispiel gegeben.

Die Erfindung wird nachfolgend anhand von Ausführungsbeispielen und schematischen Zeichnungen näher erläutert:
- Fig. 1: zeigt eine schematische Draufsicht auf eine erste Ausführungsform der Erfindung.
- Fig. 2: zeigt eine perspektivische Ansicht von unten auf die erste Ausführungsform.
- Fig. 3: zeigt die Ansicht von Fig. 2 mit den Hauptkomponenten.
- Fig. 4: zeigt eine schematische Draufsicht auf eine zweite Ausführungsform der Erfindung.

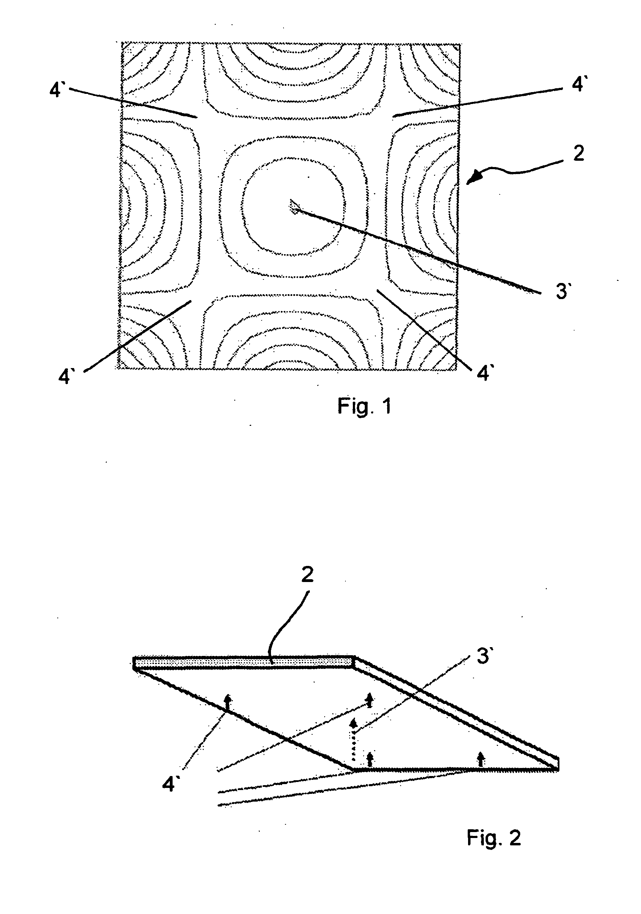

Die Fig. 1 bis 3 zeigen schematische Ansichten einer ersten Ausführungsform der Erfindung. Eine Platte 2 aus einer Aluminiumlegierung AlMg4,5MN0,7 mit den Abmaßen 980 mm x 980 mm ist 15 mm dick und wird mit einer Frequenz von 20 KHz an der Position 3' mittels des Schwingungserzeugers 3 in Schwingungen versetzt. Dabei bildet sich über die Plattenoberfläche verteilt ein stehendes Schwingungsmuster aus, das an vorbestimmten Stellen Schwingungsmaxima und Schwingungsminima aufweist. Die mit Bezugszeichen 4' gekennzeichneten vier Stellen bilden ein Schwingungsminimum. An diesen Stellen ist die Platte 2 mit Schrauben 4 aus Kunststoff fest verschraubt. Diese Kunststoffschrauben 4 wirken als passive Schwingungsdämpfer.

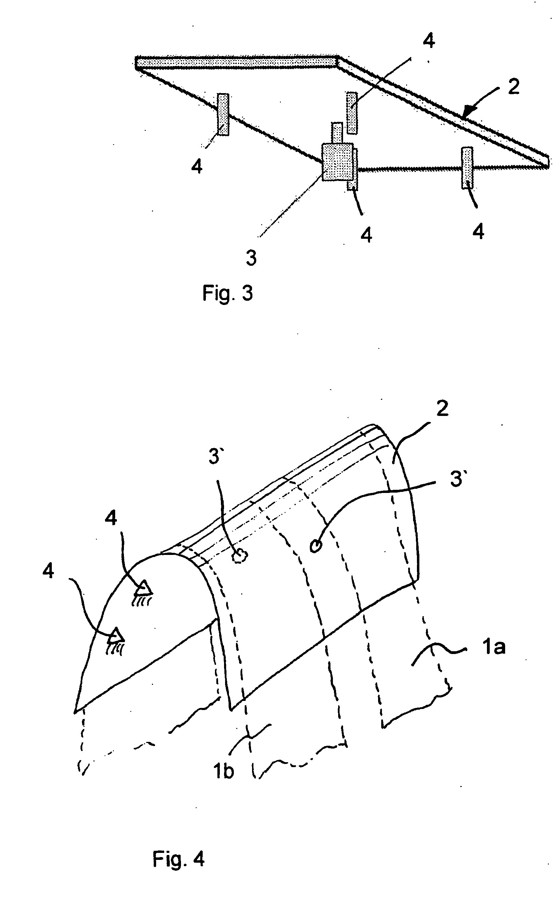

Die Fig. 4 zeigt eine perspektivische schematische Ansicht einer zweiten Ausführungsform der Erfindung. Eine gebogene plattenförmige Aufnahme 2 dient zur Umleitung von zwei Folienbahnen 1a und 1b. Mit dem Bezugszeichen 3' sind die zwei Anregungspunkte bezeichnet, an denen die Schwingungserzeuger 3 (nicht gezeigt) von außen angeordnet sind. Mit dem Bezugszeichen 4 sind schematisch zwei der Abstützelemente 4 bezeichnet, an denen das gebogene Blech 2 abgestützt wird. Wenn das Blech 2 mit einer vorbestimmen Frequenz angeregt wird, bildet sich ein Luftfilm zwischen der Blechoberfläche und den Folienbahnen aus, sodass die Folienbahnen 1a, 1b die Blechoberfläche nicht berühren.

Dem Fachmann ist klar, dass die Wahl der geeigneten Anregungspunkte, deren Anzahl und die Wahl der geeigneten Abstützpunkte von technologischen Parametern abhängen, deren Bestimmung mit dem Fachmann bekannten Methoden erfolgen kann. Gleichfalls wird der Fachmann auch andere Parameter berücksichtigen, die die Schwingungseigenschaften der Vorrichtung beeinflussen können, wie z. B. die Eigenschaften des umgebenden Gases (z. B. Luft).

## Patentansprüche

1. Vorrichtung zum berührungslosen Transportieren und Halten von flachen Gegenständen und Materialien **(1)**, wobei die Vorrichtung die nachfolgenden Merkmale aufweist:
- wenigstens eine schwingungsfähige plattenförmige Aufnahme **(2)** zur Aufnahme des zu transportierenden oder zu haltenden Gegenstandes, an der
- wenigstens ein Schwingungserzeuger **(3)** befestigt ist der an einer vorbestimmten Stelle der plattenförmigen Aufnahme **(2)** angeordnet ist, um die plattenförmige Aufnahme **(2)** in Biegeschwingungen zu versetzen, und
- wenigstens zwei Abstützelemente **(4)**, **dadurch gekennzeichnet, dass**
- die Abstützelemente **(4)** einen Schwingungsdämpfer aufweisen,
- , und die Abstützelemente **(4)** an Stellen angeordnet sind, an denen die Amplitude der Biegeschwingung wenigstens 50 % kleiner ist als die Maximalamplitude.

2. Vorrichtung nach Anspruch 1, **dadurch gekennzeichnet, dass** der Schwingungsdämpfer ein passiver Schwingungsdämpfer ist.

3. Vorrichtung nach Anspruch 1, **dadurch gekennzeichnet, dass** der Schwingungsdämpfer ein aktiver Schwingungsdämpfer ist.

4. Vorrichtung nach Anspruch 2, **dadurch gekennzeichnet, dass** der passive Schwingungsdämpfer einstellbar oder regelbar ist.

5. Vorrichtung nach Anspruch 3, **dadurch gekennzeichnet, dass** der aktive Schwingungsdämpfer einstellbar oder regelbar ist.

6. Vorrichtung nach einem der vorhergehenden Ansprüche, **dadurch gekennzeichnet, dass** die plattenförmige Aufnahme **(2)** zweidimensional gewölbt ist.

7. Vorrichtung nach den Ansprüchen 1 bis 5, **dadurch gekennzeichnet, dass** die plattenförmige Aufnahme **(2)** dreidimensional gewölbt ist.

8. Vorrichtung nach einem der vorhergehenden Ansprüche, **dadurch gekennzeichnet, dass** der Schwingungserzeuger **(3)** auf der Oberseite der plattenförmigen Aufnahme **(2)** und die Abstützelemente **(4)** auf der Unterseite der plattenförmigen Aufnahme **(2)** angeordnet sind.

## Claims

1. Device for transporting and holding flat objects and materials **(1)** in a contact free manner, wherein the device comprises the following features:
- at least one oscillatory plate-like take-up **(2)** for receiving the object to be transported or held, at which
- at least one oscillation generator **(3)** is fixed, which is arranged at a predetermined position of the plate-like take-up **(2)** in order to set the plate-like take-up **(2)** into flexural vibrations, and
- at least two supporting members **(4)**, **characterized in that**
- the supporting members **(4)** comprise a vibration absorber, and
- the supporting members **(4)** are arranged at positions where the amplitude of the flexural vibration is lower than the maximum amplitude by at least 50 %.

2. Device according to claim 1, **characterized in that** the vibration absorber is a passive vibration absorber.

3. Device according to claim 1, **characterized in that** the vibration absorber is an active vibration absorber.

4. Device according to claim 2, **characterized in that** the passive vibration absorber is adjustable or controllable.

5. Device according to claim 3, **characterized in that** the active vibration absorber is adjustable or controllable.

6. Device according to any one of the preceding claims, **characterized in that** the plate-like take-up **(2)** is arched two-dimensionally.

7. Device according to claims 1 to 5, **characterized in that** the plate-like take-up **(2)** is arched three-dimensionally.

8. Device according to any one of the preceding claims, **characterized in that** the oscillation generator **(3)** is arranged on the top side of the plate-like take-up **(2)** and the supporting members **(4)** are arranged on the bottom side of the plate-like take-up **(2)**.

## Revendications

1. Dispositif pour transporter et tenir sans contact des objets plats et des matériaux **(1)** lequel présente les caractéristiques suivantes:
- au moins une réception en plate-forme **(2)** capable d'osciller pour la réception de l'objet à transporter ou à tenir, à laquelle
- au moins un oscillateur **(3)** est fixé lequel est placé à un endroit prédéterminé de la réception en plate-forme **(2)** pour faire passer la réception en plate-forme **(2)** en vibrations de flexion et
- au moins deux éléments de soutien **(4)**, **caractérisé en ce que**
- les éléments de soutien **(4)** présentent un amortisseur de vibrations et
- les éléments de soutien **(4)** sont placés à des endroits où l'amplitude de la vibration de flexion est plus basse de 50 % minimum que l'amplitude maximale.

2. Dispositif selon la revendication 1, **caractérisé en ce que** l'amortisseur de vibrations est un amortisseur de vibrations passif.

3. Dispositif selon la revendication 1, **caractérisé en ce que** l'amortisseur de vibrations est un amortisseur de vibrations actif.

4. Dispositif selon la revendication 2, **caractérisé en ce que** l'amortisseur de vibrations passif est ajustable ou réglable.

5. Dispositif selon la revendication 3, **caractérisé en ce que** l'amortisseur de vibrations actif est ajustable ou réglable.

6. Dispositif selon une des revendications précédentes, **caractérisé en ce que** la réception en plate-forme **(2)** est voûtée en deux dimensions.

7. Dispositif selon les revendications 1 à 5, **caractérisé en ce que** la réception en plate-forme **(2)** est voûtée en trois dimensions.

8. Dispositif selon une des revendications précédentes, **caractérisé en ce que** l'oscillateur **(3)** est placé sur la partie supérieure de la réception en plate-forme **(2)** et les éléments de soutien **(4)** sont placés sur la partie inférieure de la réception en plate-forme **(2)**.
